# EUROPÄISCHE PATENTANMELDUNG

(11) **EP 4 461 584 A1**
(43) Veröffentlichungstag der Anmeldung: **13.11.2024**
(21) Anmeldenummer: 24170785.0
(22) Anmeldetag: 17.04.2024
(51) Int. Cl.: B60L 7/00, B60L 15/20, B60W 30/18

(54) **VERFAHREN ZUM BETREIBEN EINES KRAFTFAHRZEUGS MIT EINEM ELEKTRISCHEN TRAKTIONSMOTOR**

(30) Priorität: 11.05.2023 DE 102023204379
(71) Anmelder: VOLKSWAGEN AG, 38440 Wolfsburg (DE)
(72) Erfinder: Auer, Richard, 38667 Bad Harzburg (DE)

(57) **Zusammenfassung**

Verfahren zum Betreiben eines Kraftfahrzeugs mit einem elektrischen Traktionsmotor mit mindestens einer elektrischen Spule zur Erzeugung eines Momenten-Magnetfelds, wobei für einen Betrieb des Kraftfahrzeugs das von dem Traktionsmotor erzeugte Antriebsmoment (M) in Abhängigkeit von einer variierenden Betriebsstellung eines Fahrpedals gesteuert wird, wobei diese Steuerung einen motorischen und einen generativen Betrieb des Traktionsmotors betrifft, dadurch gekennzeichnet, dass der Traktionsmotor zur Erzielung eines Nullmoments in einem Freilauf betrieben wird, in dem ein Stromfluss durch die Spule verhindert ist, wobei der Freilauf-Betrieb für einen definierten Bereich (Δx) der Betriebsstellung des Fahrpedals aufrecht gehalten wird.

## Beschreibung

Die Erfindung betrifft ein Verfahren zum Betreiben eines Kraftfahrzeugs mit einem elektrischen Traktionsmotor.

Beim sogenannten One-Pedal-Driving erfolgt eine Beeinflussung der Geschwindigkeit eines Kraftfahrzeugs durch einen Fahrer mittels eines einzelnen Fahrpedals, wobei das Kraftfahrzeug sowohl angetrieben als auch aktiv gebremst werden kann. One-Pedal-Driving kommt insbesondere bei Kraftfahrzeugen zum Einsatz, die einen elektrischen Traktionsmotor, d.h. eine Elektromaschine, die Fahrantriebsleistung für das Kraftfahrzeug bereitstellen kann, aufweist. Ein aktives Bremsen wird dabei im Allgemeinen durch einen generatorischen Betrieb des Traktionsmotors bewirkt. Beim One-Pedal-Driving führt üblicherweise ein mit einem relativ großen Weg betätigtes Pedal zu einem motorischen Antrieb des Kraftfahrzeugs infolge eines von dem Traktionsmotor abgegebenen positiven Drehmoments. Wird der Betätigungsweg des Fahrpedals reduziert - bis hin zu Null (vollständige Entlastung des Fahrpedals) - wird eine Nutzbremsung durch das Erzeugen eines negativen Drehmoments mittels des Traktionsmotors eingeleitet. Die Höhe des negativen Bremsmoments kann dabei von dem Ausmaß der Reduzierung des Betätigungswegs abhängen.

Der Erfindung liegt die Aufgabe zugrunde, den Betrieb eines Kraftfahrzeugs mit einem elektrischen Traktionsmotor zu verbessern.

Diese Aufgabe ist bei einem Verfahren gemäß dem Patentanspruch 1 gelöst. Vorteilhafte Ausführungsformen dieses Verfahrens sind Gegenstände der abhängigen Patentansprüche und ergeben sich aus der nachfolgenden Beschreibung der Erfindung.

Erfindungsgemäß ist ein Verfahren zum Betreiben eines Kraftfahrzeugs, das mindestens einen elektrischen Traktionsmotor umfasst, vorgesehen. Der elektrische Traktionsmotor weist mindestens eine (elektrotechnische) Spule auf, die der Erzeugung eines Momenten-Magnetfelds dient oder dienen kann. Ein Momenten-Magnetfeld ist ein Magnetfeld, das ein (positives oder negatives) Drehmoment des Traktionsmotors bewirkt. Zur Erzeugung des Momenten-Magnetfelds kann die mindestens eine Spule mittels einer Steuerungsvorrichtung des Kraftfahrzeugs mit einer definierten elektrischen Spannung beaufschlagt werden, wodurch ein Stromfluss durch die Erregerspule erzeugt wird. Dieser Stromfluss wiederum bewirkt der allgemeinen Funktionsweise einer Elektromaschine entsprechend die Erzeugung des Momenten-Magnetfelds.

Für einen Betrieb des Kraftfahrzeugs wird das von dem Traktionsmotor erzeugte Antriebsmoment in Abhängigkeit von einer variierenden Betriebsstellung eines (einzelnen) Fahrpedals gesteuert, wobei die Steuerung einen motorischen und einen generativen Betrieb des Traktionsmotors betrifft. Das Kraftfahrzeug wird demnach (zumindest zeitweise) gemäß dem One-Pedal-Driving-Prinzip betrieben. Als Antriebsmoment wird dabei ein an allen mittels des Traktionsmotors angetriebenen Rädern des Kraftahrzeugs anliegendes Drehmoment verstanden, das auf einem von dem Traktionsmotor erzeugten (positiven oder negativen) Drehmoment beruht.

Erfindungsgemäß ist vorgesehen, dass der Traktionsmotor zur (temporären) Erzielung eines Nullmoments in einem Freilauf betrieben wird, in dem die Spule unbestromt ist, d.h. kein Stromfluss durch die Spule vorliegt. Als "Nullmoment" wird dabei dasjenige Antriebsmoment verstanden, das an den Rädern des Kraftfahrzeugs anliegt, wenn von dem Traktionsmotor aufgrund der fehlenden Bestromung der Spule kein positives oder negatives Drehmoment erzeugt wird (geringfügige Reibungsverluste, die infolge einer Rotation des Traktionsmotors entstehen, sind dabei nicht berücksichtigt). Infolge von Reibungsverlusten in dem Antriebsstrang kann das Nullmoment einen von Null abweichenden (negativen) Wert aufweisen. Dieser wird jedoch üblicherweise sehr nahe bei Null liegen.

Zur Verhinderung eines Stromflusses durch die Spule kann vorgesehen sein, dass mindestens ein Transistor der Steuerungsvorrichtung, der auf einem Halbleiter beruhen kann, in einen nicht leitenden Zustand versetzt wird. Ohne einen entsprechenden Stromfluss werden elektrische Verluste innerhalb des Traktionsmotors weitestmöglich vermieden, so dass der Verbrauch an elektrischer Energie für den Zeitraum, in dem der Traktionsmotor in dem Freilauf betrieben wird, entsprechend minimiert ist. In einer Phase eines Übergangs von einem motorischen zu einem generatorischen Betrieb des Traktionsmotors - oder andersherum - kann folglich zumindest kurzzeitig ein minimaler elektrischer Energieverbrauch realisiert werden.

Erfindungsgemäß ist weiterhin vorgesehen, dass der Freilauf-Betrieb für einen definierten Bereich der Betriebsstellung des Fahrpedals aufrecht gehalten wird. Würde das Kraftfahrzeug nicht in einem Freilauf betrieben, würde dieser definierte Bereich der Betriebsstellung demnach einem zugehörigen Bereich des Antriebsmoments entsprechen, in dem dieses auch von Null in einem relevanten Maße abweichende Werte aufweist. Als Referenz dient dabei eine proportionale Änderung des Antriebsmoments über der maximal möglichen Änderung der Betriebsstellung (Betätigungsweg) des Fahrpedals. Vorgesehen ist folglich, dass der Freilauf nicht nur in einem Zeitpunkt eines Übergangs von einem motorischen zu einem generatorischen Betrieb des Traktionsmotors - oder andersherum - in dem Freilauf betrieben wird, sondern in einem diesbezüglich relativ großen Bereich, der vorzugsweise einem Bereich des Antriebsmoments von mindestens 20 Nm entspricht beziehungsweise entsprechen würde. Demnach ist erfindungsgemäß vorgesehen, in einem Betriebskennfeld des Traktionsmotors einen definierten, relativ großen Bereich der Betriebsstellung des Fahrpedals vorzusehen, in dem das Nullmoment aufrecht gehalten wird. Durch eine solche Minimalgröße des definierten Bereichs kann folglich ein relativ großer Zeitraum, innerhalb dessen der Traktionsmotor in einem Freilauf betrieben wird, realisiert werden, was sich entsprechend positiv hinsichtlich des Energieverbrauchs auswirken kann.

Andererseits kann es sich negativ auf das Fahrverhalten des Kraftfahrzeugs auswirken, wenn der definierte Bereich der Betriebsstellung des Fahrpedals zu groß gewählt wird, weil dann für den Fahrer deutlich bemerkbar ist, dass eine veränderte Betätigung des Betriebspedals innerhalb dieses Bereichs nicht zu einer (erwarteten) spürbaren Änderung des Antriebsmoments führt, da eine Betätigung des Betriebspedal in dem definierten Bereich hinsichtlich des Antriebsmoments wie mechanisches Spiel wirkt.

Vorzugsweise kann vorgesehen sein, dass der definierte Bereich der Betriebsstellung des Fahrpedals einem Bereich des Antriebsmoments von maximal 100 Nm entspricht. Diese Größe des definierten Bereichs kann insbesondere noch ausreichend klein sein, damit der erfindungsgemäße Freilauf, trotz einer Größe des definierten Bereichs, die sich bereits deutlich positiv hinsichtlich des Energieverbrauchs auswirkt, von einem Fahrer des Kraftfahrzeugs im Wesentlichen unbemerkt bleibt.

Andererseits kann es auch vorteilhaft sein, eine Bemerkbarkeit des Freilaufs durch den Fahrer bewusst vorzusehen oder in Kauf zu nehmen, um einen möglichst großen Effekt hinsichtlich der Energieeinsparung realisieren zu können. Dadurch kann der Fahrer auch animiert werden, aktiv möglichst häufig und möglichst lang einen Freilauf des Traktionsmotors zu bewirken, wobei der Fahrer diesbezüglich auch eine entsprechende optische und/oder akustische und/oder haptische Rückmeldung erhalten kann. Für ein solches Vorgehen kann beispielsweise vorgesehen sein, dass der definierte Bereich der Betriebsstellung des Fahrpedals einem Bereich des Antriebsmoments entspricht, der größer als 100 Nm ist. Andererseits sollte dieser definierte Bereich aber auch nicht zu groß werden, um zu große negative Auswirkungen auf das Fahrverhalten des Kraftfahrzeugs zu vermeiden, die daraus resultieren, dass eine veränderte Betätigung des Betriebspedals innerhalb dieses Bereichs nicht zu einer erwarteten Veränderung des Antriebsmoments führt. Insbesondere kann vorgesehen sein, dass der definierte Bereich der Betriebsstellung des Fahrpedals einem Bereich des Antriebsmoments von maximal 200 Nm entspricht.

Vorzugsweise kann vorgesehen sein, dass die Steuerung des Antriebsmoments außerhalb des definierten Bereichs der Betriebsstellung des Fahrpedals in einem stetigen Verhältnis zu der Betriebsstellung des Fahrpedals erfolgt. Bei einer kontinuierlichen Änderung der Stellung des Fahrpedals in einer (Bewegungs-)Richtung ändert sich demnach das Antriebsmoment ebenfalls kontinuierlich in einer Richtung (zunehmend oder abnehmend). Besonders bevorzugt kann vorgesehen sein, dass die Steuerung des Antriebsmoments zumindest abschnittsweise außerhalb des definierten Bereichs der Betriebsstellung des Fahrpedals in einem proportionalen Verhältnis zu der Betriebsstellung des Fahrpedals erfolgt.

Der definierte Bereich der Betriebsstellung des Fahrpedals kann variabel sein. Dies kann insbesondere für die Größe des Bereichs und/oder für relative Lage des Bereichs innerhalb des Gesamtbereichs der Veränderbarkeit der Betriebsstellung des Fahrpedals gelten. Dabei kann weiterhin bevorzugt vorgesehen sein, dass für eine Variabilität des definierten Bereichs eine Auswahl aus verschiedenen definierten Bereichen der Betriebsstellung des Fahrpedals von dem Fahrer des Kraftfahrzeugs vorgenommen wird oder vorgenommen werden kann. Beispielsweise kann dieser aus mehreren Optionen bezüglich der Maximalgröße des definierten Bereichs (z.B. 100 Nm oder 200 Nm) auswählen, um wahlweise eine möglichst geringe Auswirkung des Freilaufs auf das Fahrverhalten oder eine bewusst spürbare Auswirkung auf das Fahrverhalten mit dem Ziel einer möglichst großen Energieeinsparung zu erhalten.

Ein erfindungsgemäß zu betreibendes Kraftfahrzeug kann insbesondere ein radbasiertes und nicht schienengebundenes Kraftfahrzeug (vorzugsweise ein PKW oder ein LKW) sein.

Die Erfindung wird nachfolgend anhand von in den Zeichnungen dargestellten Ausführungsbeispielen näher erläutert. In den Zeichnungen zeigt, teilweise in vereinfachter Darstellung:
- Fig. 1:: ein erfindungsgemäß betreibbares Kraftfahrzeug;
- Fig. 2:: Verläufe des von einem Traktionsmotor des Kraftfahrzeugs erzeugten Antriebsmoments über einem Betätigungsweg eines Fahrpedals bei einer konventionellen und bei einer erfindungsgemäßen Steuerung des Traktionsmotors gemäß einer ersten Ausführungsform;
- Fig. 3:: Verläufe des von dem Traktionsmotor des Kraftfahrzeugs erzeugten Antriebsmoments über dem Betätigungsweg des Fahrpedals bei einer konventionellen und bei einer erfindungsgemäßen Steuerung des Traktionsmotors gemäß einer zweiten Ausführungsform;
- Fig. 4:: den zeitlichen Verlauf des Antriebsmoments über einem zeitlichen Abschnitt eines Fahrbetriebs des Kraftfahrzeugs; und
- Fig. 5:: den in der Fig. 4 mit V gekennzeichneten Abschnitt des dortigen Diagramms mit vergrößerter Skalierung der Vertikalachse.

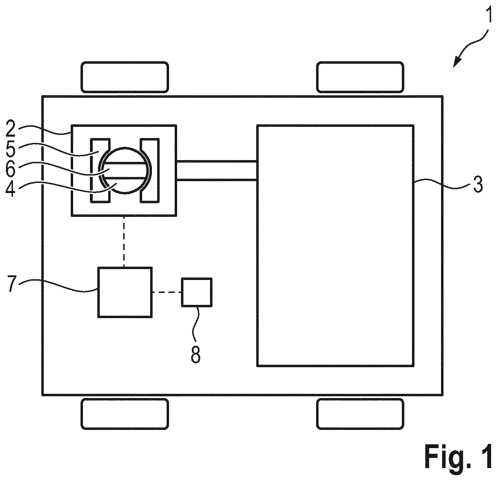

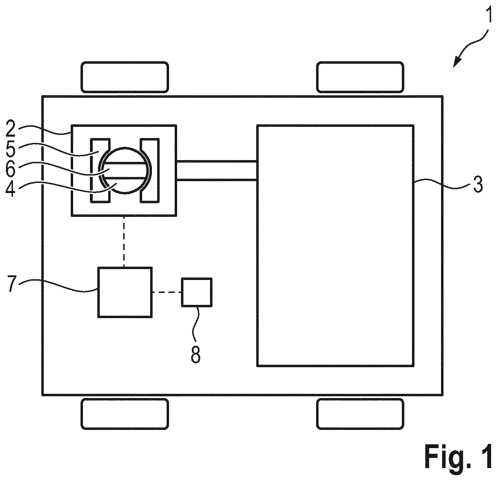

Die Fig. 1 zeigt in vereinfachter Darstellung ein Kraftfahrzeug 1 mit einem elektrischen Traktionsmotor 2, der dafür eingerichtet ist, eine Antriebsleistung für einen Fahrantrieb des Kraftfahrzeugs 1 bereitzustellen. Die hierfür erforderliche elektrische Leistung kann dem Traktionsmotor 2 von einer Traktionsbatterie 3 bereitgestellt werden. Der Traktionsmotor 2 kann in bekannter Weise einen Rotor 4 und einen Stator 5 aufweisen. Der Stator 5 kann Dauermagnete und/oder eine oder mehrere Erregerspulen zur definierten Erzeugung eines (Momenten-)Magnetfelds aufweisen. Der Rotor 4 umfasst mindestens eine elektrische Spule 6. Die mindestens eine Spule 6 des Rotors 4 kann für einen motorischen Antrieb des Traktionsmotors 2 derart mit einer elektrischen Spannung mit wechselnder Polung beaufschlagt werden, dass diese ein sich änderndes (Momenten-)Magnetfeld erzeugt, wobei durch die Wechselwirkung der (Momenten-)Magnetfelder, die einerseits von dem Stator 4 und andererseits von dem Rotor 5 erzeugt werden, der Rotor 4 rotierend angetrieben wird. Bei einer Umkehrung dieses Funktionsbetriebs wird der Traktionsmotor 2 generatorisch betrieben, d.h. eine von außen bewirkte Rotation des Rotors 5 führt durch eine Wechselwirkung der (Momenten-)Magnetfelder zu einer Induktion eines Stroms in der mindestens einen Spule 6 des Rotors 5.

Für einen gesteuerten Fahrbetrieb des Kraftfahrzeugs 1 wird der Traktionsmotor 2 mittels einer Steuerungsvorrichtung 7 angesteuert. Eine solche Ansteuerung kann in Abhängigkeit von einer Betriebsstellung eines Fahrpedals 8 erfolgen, das von einem Fahrer des Kraftfahrzeugs aktiv betätigt werden kann. Ein solches Fahrpedal 8 kann insbesondere als Fußpedal, das zur Betätigung durch einen Fuß des Fahrers eingerichtet ist, ausgestaltet sein. Dabei kann ein relativ weitgehendes Betätigen des Fahrpedals 8 tendenziell zu der Erzeugung eines relativ großen positiven Antriebsmoments führen, während ein vollständiges Entlasten (Betätigungsweg von Null) üblicherweise zu einem Deaktivieren des Traktionsmotors 2 führt, so dass dieser dann nicht (und folglich weder motorisch noch generativ) betrieben wird. Die mindestens eine Spule 6 des Traktionsmotors kann dann unbestromt sein, indem an dieser keine elektrische Spannung anliegt.

Weiterhin ist bei dem Kraftfahrzeug 1 ein sogenanntes One-Pedal Driving umsetzbar. In Abhängigkeit von dem Fahrbetriebszustand des Kraftfahrzeugs 1 kann demnach ein Entlasten beziehungsweise ein Reduzieren des Betätigungswegs des Fahrpedals 8 dazu führen, dass der Traktionsmotor 2 von einem motorischen Betrieb in einen generatorischen Betrieb wechselt, so dass das Kraftfahrzeug 1 mittels des Traktionsmotors 2 aktiv gebremst werden kann. Ein solcher Wechsel kann dabei auch vor dem Erreichen einer vollständigen Entlastung des Fahrpedals 8 vorliegen, so dass durch das Ausmaß der Entlastung des Fahrpedals 8 auch der generatorische Betrieb des Traktionsmotors 2 mittels des Fahrpedals 8 steuerbar ist. Die bei einem generatorischen Betrieb von dem Traktionsmotor 2 erzeugte elektrische Energie kann in der Traktionsbatterie 3 gespeichert werden.

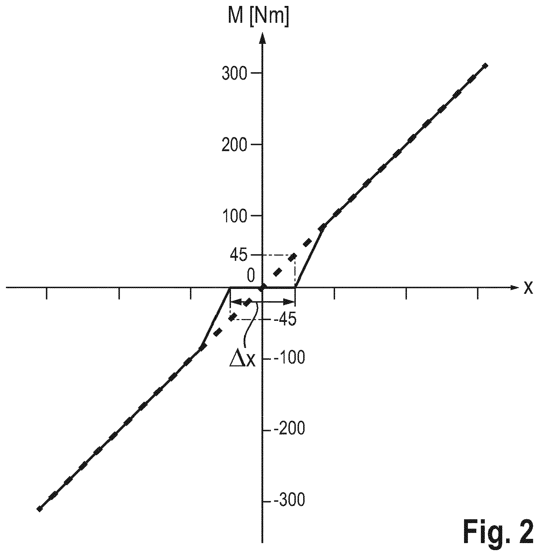

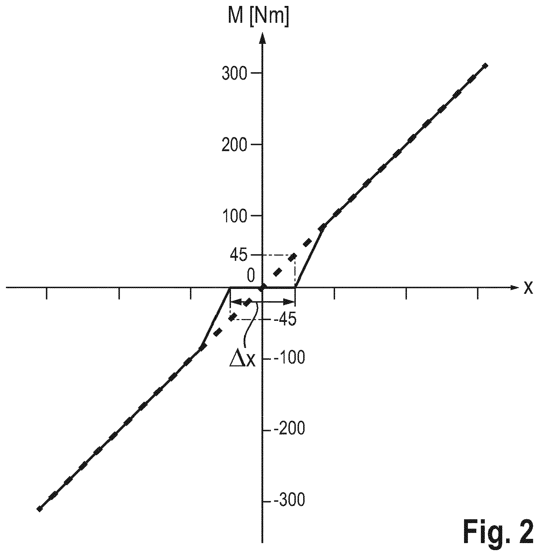

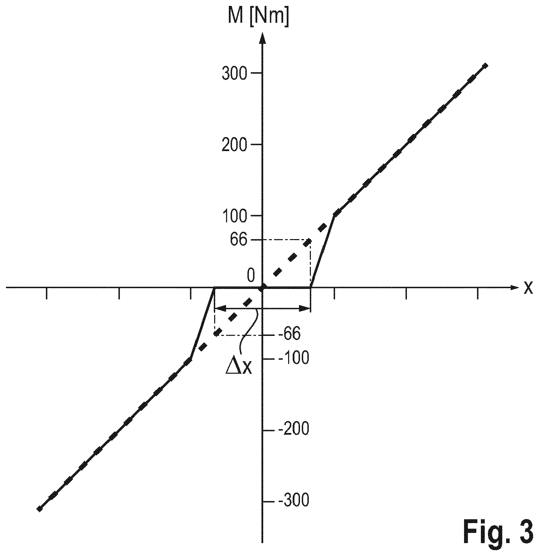

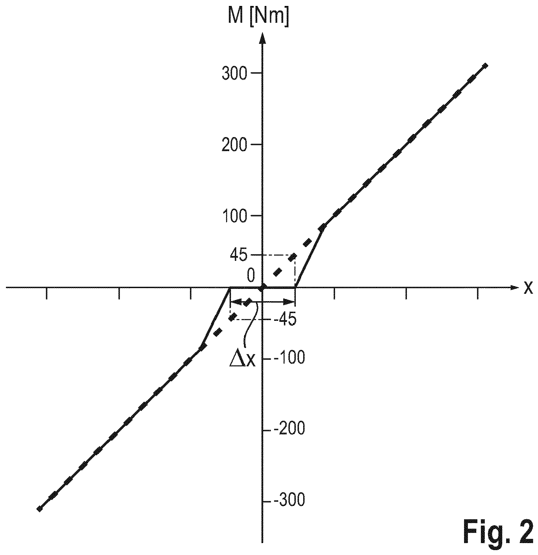

Die Fig. 2 und 3 zeigen jeweils in einem Diagramm die Abhängigkeit des von dem Traktionsmotor 2 erzeugten Antriebsmoments M (auf der Vertikalachse) von dem Betätigungsweg x des Fahrpedals 8 (auf der Horizontalachse). Das Antriebsmoment M umfasst dabei sowohl positive als auch negative Werte und damit auch einen Nulldurchgang, in dem von dem Traktionsmotor 2 weder ein positives noch ein negatives Antriebsmoment, sondern ein Nullmoment erzeugt wird.

In jedem der Diagramme gemäß den Fig. 2 und 3 ist zum einen mit gestrichelter Linie ein entsprechender Verlauf für eine konventionelle Steuerung des von dem Traktionsmotor 2 erzeugten Antriebsmoments M in Abhängigkeit von dem Betätigungsweg x des Fahrpedals 8 gezeigt, wobei über dem gesamten Betätigungsweg x eine proportionale Abhängigkeit vorliegt.

Weiterhin ist in jedem der Diagramme gemäß den Fig. 2 und 3 mit durchgezogener Linie ein Verlauf des von dem Traktionsmotor 2 erzeugten Antriebsmoments M in Abhängigkeit von dem Betätigungsweg x des Fahrpedals 8 bei einer erfindungsgemäßen Steuerung gezeigt. Diese zeigt ebenfalls eine proportionale Abhängigkeit des Antriebsmoments M von dem Betätigungsweg x des Fahrpedals 8, dies jedoch nur in jeweils einem ersten Abschnitt beidseitig außerhalb eines definierten Bereichs hinsichtlich der Betriebsstellung beziehungsweise des Betätigungswegs x des Fahrpedals. Werden diese zwei proportionalen Abschnitte außerhalb des definierten Bereichs miteinander verbunden, würde diese Verbindung demnach durch den Nullpunkt bezüglich des Antriebsmoments verlaufen. In dem definierten Bereich Δx ist stets ein Nullmoment des Traktionsmotors 2 eingestellt. Hierfür wird der Traktionsmotor in einem Freilauf betrieben, in dem die Spule(n) 6 des Traktionsmotors unbestromt sind.

Um zu erreichen, dass über den relativ großen definierten Bereich des Betätigungswegs x des Fahrpedals 8 ein Nullmoment vorliegt, ist vorgesehen, die Steuerung des Antriebsmoments M in Abhängigkeit von dem Betätigungsweg x des Fahrpedals 8 sowohl im positiven wie auch im negativen Bereich des Antriebsmoments M jeweils in einem zweiten Abschnitt beidseitig außerhalb des definierten Bereichs Δx mit einem geänderten Linearitätsfaktor umzusetzen, um einen im Vergleich zu dem ersten Abschnitt steileren beziehungsweise sich schneller dem Nulldurchgang nähernden Verlauf zu erreichen.

Der definierte Bereich Δx gemäß der Fig. 1 ist kleiner als derjenigen der Fig. 2 gewählt. Derjenige gemäß der Fig. 1 deckt dabei beispielsweise diejenigen Betriebsstellungen des Fahrpedals 8 ab, die bei der konventionellen, sich über den gesamten Betätigungsweg des Fahrpedals 8 erstreckenden proportionalen Steuerung den Bereich des Antriebsmoments M zwischen +45 Nm und -45 Nm abdeckt, während dies bei dem Ausführungsbeispiel gemäß der Fig. 2 der Bereich des Antriebsmoments M zwischen +66 Nm und -65 Nm ist.

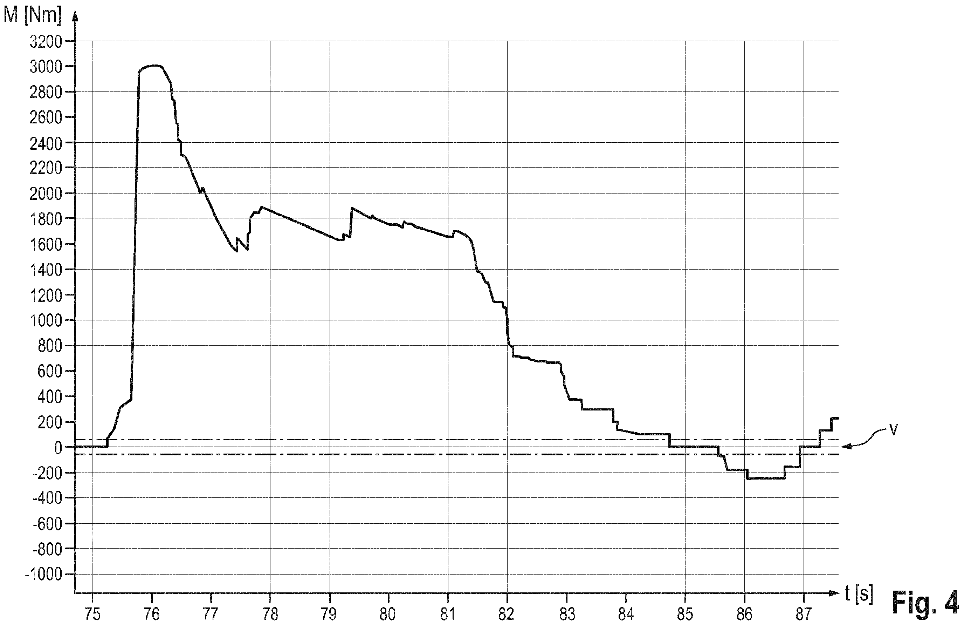

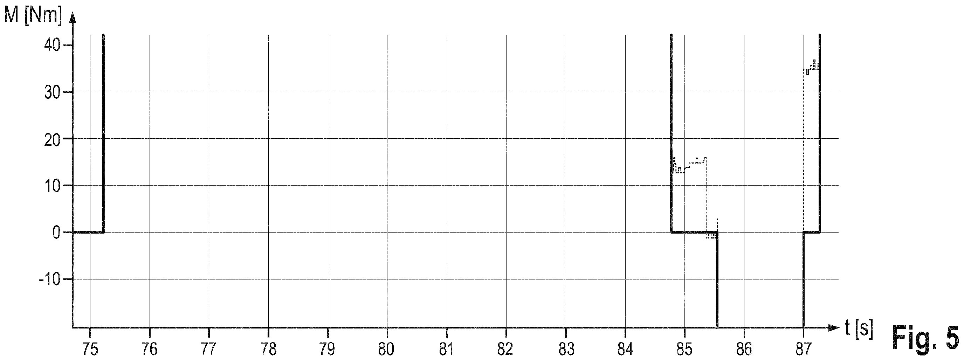

Die Fig. 4 und 5 zeigen ein solches Vorgehen anhand weiterer Diagramme. Dabei zeigt die Fig. 4 in einem Diagramm den Verlauf des Antriebsmoments M (auf der Vertikalachse) über der Zeit t in einem Abschnitt eines Fahrbetriebs des Kraftfahrzeugs 1. In dem Zeitraum zwischen 75 s und 76 s erfolgte zunächst eine spontane Erhöhung des erzeugten (positiven) Antriebsmoments M, woraufhin (unstetig) das Antriebsmoment bis in den negativen Bereich, in dem der Traktionsmotor 2 generatorisch betrieben wurde, reduziert wurde. In dem vergrößerten Abschnitt gemäß der Fig. 5 ist erkennbar, dass jeweils in einem Zeitraum um ca. 85 s und um ca. 87 s vorgesehen ist, ein Nullmoment durch das Erzeugen eines Freilaufs des Traktionsmotors 2 über einen relativ langen Zeitraum und in einem entsprechend großen Bereich der Betriebsstellung des Fahrpedals 8 zu realisieren.

In der Fig. 5 ist mit gestrichelten Linien ergänzend der Verlauf des Antriebsmoments M in diesen Abschnitten des Fahrbetriebs dargestellt, der sich ergeben würde, sofern eine konventionelle Steuerung mit vollständig proportionalem Verhältnis des Antriebsmoments M zu dem Betätigungsweg x des Fahrpedals 8, wie dies auch in den Fig. 2 und Fig. 3 mit gestrichelten Linien dargestellt ist, umgesetzt würde.

### Bezugszeichenliste

- 1: Kraftfahrzeug
- 2: Traktionsmotor
- 3: Traktionsbatterie
- 4: Rotor des Traktionsmotors
- 5: Stator des Traktionsmotors
- 6: Spule des Rotors
- 7: Steuerungsvorrichtung
- 8: Fahrpedal

- M: Antriebsmoment
- x: Betätigungsweg des Fahrpedals
- Δx: definierter Bereich der Betriebsstellung des Fahrpedals
- t: Zeit

## Patentansprüche

1. Verfahren zum Betreiben eines Kraftfahrzeugs (1) mit einem elektrischen Traktionsmotor (2), der mindestens eine elektrische Spule (6) zur Erzeugung eines Momenten-Magnetfelds umfasst, wobei für einen Betrieb des Kraftfahrzeugs (1) das von dem Traktionsmotor (2) erzeugte Antriebsmoment (M) in Abhängigkeit von einer variierenden Betriebsstellung eines Fahrpedals (8) gesteuert wird, wobei diese Steuerung einen motorischen und einen generativen Betrieb des Traktionsmotors (2) betrifft, **dadurch gekennzeichnet, dass** der Traktionsmotor (2) zur Erzielung eines Nullmoments in einem Freilauf betrieben wird, in dem ein Stromfluss durch die Spule (6) verhindert ist, wobei dieser Freilauf-Betrieb für einen definierten Bereich (Δx) der Betriebsstellung des Fahrpedals (8) aufrecht gehalten wird.

2. Verfahren gemäß Anspruch 1, **dadurch gekennzeichnet, dass** die Steuerung des Antriebsmoments (M) außerhalb des definierten Bereichs (Δx) der Betriebsstellung des Fahrpedals (8) in einem stetigen Verhältnis zu der Betriebsstellung des Fahrpedals erfolgt.

3. Verfahren gemäß Anspruch 1 oder 2, **dadurch gekennzeichnet, dass** der definierte Bereich (Δx) der Betriebsstellung des Fahrpedals (8) einem Bereich des Antriebsmoments (M) von mindestens 20 Nm oder von mindestens 100 Nm bei einer proportionalen Steuerung über alle Betriebsstellungen des Fahrpedals (8) hinweg entsprechen würde.

4. Verfahren gemäß einem der vorhergehenden Ansprüche, **dadurch gekennzeichnet, dass** der definierte Bereich (Δx) der Betriebsstellung des Fahrpedals (8) einem Bereich des Antriebsmoments (M) von maximal 100 Nm oder von maximal 200 Nm bei einer proportionalen Steuerung über alle Betriebsstellungen des Fahrpedals (8) hinweg entsprechen würde.

5. Verfahren gemäß einem der vorhergehenden Ansprüche, **dadurch gekennzeichnet, dass** der definierte Bereich (Δx) der Betriebsstellung des Fahrpedals (8) variabel ist.

6. Verfahren gemäß Anspruch 5, **dadurch gekennzeichnet, dass** eine Auswahl aus verschiedenen definierten Bereichen (Δx) der Betriebsstellung des Fahrpedals (8) von einem Fahrer des Kraftfahrzeugs (1) vorgenommen wird.
